# EUROPÄISCHE PATENTSCHRIFT

(11) **EP 2 925 816 B1**
(45) Veröffentlichungstag und Bekanntmachung des Hinweises auf die Patenterteilung: **07.11.2018**
(21) Anmeldenummer: 13802911.1
(22) Anmeldetag: 27.11.2013
(51) Int. Cl.: C08L 63/00

(54) **MISCHUNG ZUR HERSTELLUNG EINES DUROMERS MIT VERBESSERTER ZÄHIGKEIT**
MIXTURE FOR PRODUCING A DUROMER WITH IMPROVED TOUGHNESS
MÉLANGE SERVANT À PRODUIRE UN DUROMÈRE À TÉNACITÉ AMÉLIORÉE

(30) Priorität: 27.11.2012 DE 102012221677
(43) Veröffentlichungstag der Anmeldung: 07.10.2015
(73) Patentinhaber: Fraunhofer-Gesellschaft zur Förderung der angewandten Forschung e.V., 80686 München (DE)
(72) Erfinder: LÜTZEN, Hendrik, 27726 Worpswede (DE); HARTWIG, Andreas, 27721 Ritterhude (DE); BITOMSKY, Peter, 28279 Bremen (DE)
(74) Vertreter: Eisenführ Speiser
(86) Internationale Anmeldenummer: PCT/EP2013/074902
(87) Internationale Veröffentlichungsnummer: WO 2014/083076

(56) Entgegenhaltungen:
- EP-A1- 0 466 310
- EP-A2- 0 148 493
- US-A- 3 739 041

## Beschreibung

Die Erfindung betrifft eine Mischung für ein duromerbildendes Polymersystem, und ein Bauteil hergestellt oder herstellbar unter Verwendung dieser Mischung.

Die Erfindung betrifft ferner die Verwendung der genannten Mischung zur Herstellung eines Bauteils sowie ein Verfahren zur Herstellung der Mischung für das Polymersystem und ein Verfahren zur Herstellung eines Bauteils unter Verwendung dieser Mischung.

### Stand der Technik:

Teilkristalline Thermoplaste sind seit vielen Jahren bekannt und bekommen aufgrund ihrer herausragenden Eigenschaften eine immer größere wirtschaftliche Bedeutung. Herausragend sind insbesondere die mechanischen Eigenschaften im Vergleich zu den entsprechenden amorphen Thermoplasten. Dies ist insbesondere eine hohe Festigkeit kombiniert mit einer ausreichenden Elastizität und guten Zähigkeit. Durch den Einsatz von Nukleierungsmitteln (Keimbildnern) oder Tempern kann die Kristallinität eingestellt werden. Bei den Nukleierungsmitteln (Keimbildnern) kann es sich um eine Vielzahl von Substanzen handeln, angefangen von Füllstoffpartikeln, niedermolekularen Substanzen bis hin zu anderen (teil-)kristallinen Polymeren. Vernetzte Polymere (insbesondere Duromere), sind hingegen amorph und haben zwar eine hohe Festigkeit, diese ist aber verbunden mit einer großen Sprödigkeit. Das heisst für viele Anwendungen ist keine ausreichende Dehnbarkeit vorhanden und es kann leicht zum Sprödbruch kommen. Dies bedeutet auch, dass bei vielen Proben eine deutlich geringere Bruchspannung, verbunden mit unkontrolliertem, unerwartet frühem Brechen, als erwartet aufgefunden wird.

Demzufolge gab es zahlreiche Versuche die Sprödigkeit von Duromeren zu verringern, also die Zähelastizität zu verbessern. Hierzu gehört das Einmischen von gummiartigen Substanzen, Weichmachern, Flexibilisierern wie Flüssigkautschuk, die das (Duromer)Netzwerk aufweiten, der Einsatz von Füllstoffen oder auch die Zugabe von Nanopartikeln.

Bis heute gibt es keine zufriedenstellenden Lösungen und die Verbesserung der Zähigkeit von Duromeren ist Gegenstand intensiver Forschungsaktivitäten.

Teilkristalline Reaktivpolymere wurden bisher nur bei Polyurethanen zur Verbesserung der mechanischen Eigenschaften eingesetzt, im Hinblick auf die einsetzbaren Mengen ist man jedoch beschränkt, da für die Verarbeitung eine flüssige Mischung benötigt wird. Bei einem zu großen Gehalt des teilkristallinen Reaktivpolymers kann es zur spontanen und unkontrollierten Kristallisation kommen, was zu einem schwer verarbeitbaren und teilweise entmischten Reaktivsystem führen würde. Solange das teilkristalline Reaktivpolymer bei den Verarbeitungsbedingungen homogen gemischt vorliegt, werden mit teilkristallinen Polyetherpolyolen, wie dem teilkristallinen Polytetrahydrofuran, Polyurethane mit hervorragenden Eigenschaften bereitgestellt. Ebenso konnten vor einigen Jahren kationisch gehärtete Epoxidharze mit Polytetrahydrofuran als teilkristallines Polyol zur Verfügung gestellt werden (A. Hartwig, M. Sebald, Europ. Polym. J., 39 (2003) 1975-1981, "Preparation and properties of elastomers based on a cycloaliphatic diepoxide and poly(tetrahydrofuran)"). Hierbei handelt es sich um Polymere mit hoher Zähigkeit, welche aufgrund der zu geringen thermischen Stabilität und der unkontrollierten Entmischung der teilkristallinen Komponente für praktische Anwendungen aber nicht in Frage kommen.

Patent EP 0 421 154 A1 beschreibt Schmelzklebstoffe, also feste und schmelzbare Polymere (demnach handelt es sich um Thermoplaste und nicht um Duromere), welche eine Mischung von reaktiven Polyesterdiolen enthalten, um die Erstarrungsgeschwindigkeit zu kontrollieren. Um das Schmelzverhalten gut einstellen zu können, dürfen die Polyole zusammen mit dem Isocyanat keine Duromere bilden, weshalb auf den Einsatz von Alkoholkomponenten mit mehr als zwei Alkoholgruppen verzichtet wird. Die reaktiven Schmelzklebstoffe können nach der Applikation mit Luftfeuchte zu einem Duromer reagieren und sind häufig ebenfalls auf der Basis teilkristalliner Polyesterpolyole aufgebaut.

EP0466310A1 offenbart duromerbildende Polymersysteme, die hinsichtlich ihrer Handhabbarkeit noch verbesserungswürdig sind.

Unmodifizierte, duromere Epoxidharze, Polyurethane, Acrylate, Methacrylate und ungesättigte Polyester sind spröde und weisen trotz prinzipiell hoher Festigkeiten keine befriedigenden mechanischen Eigenschaften auf. Die nach dem Stand der Technik bekannten Duromere sind amorph. Überraschenderweise hat sich bei der Erfindung gezeigt, dass der Einsatz von kristallinen Reaktivpolymeren in den Duromeren, welche chemisch bei der Härtungsreaktion in das Duromer eingebunden werden, zu einer verbesserten Festigkeit und Reißdehnung und damit Zähigkeit des Duromers führen. Um die mechanischen Eigenschaften in hinreichendem Maße verbessern zu können, müssen die Reaktivpolymere in einer solchen Menge zugesetzt werden, dass sie nicht vollständig bei Raumtemperatur in dem Harzsystem gelöst vorliegen. Dies hat zur Folge, dass sich große Kristallite in der Harzzusammensetzung bilden und sich das kristallisationsfähige Reaktivpolymer makroskopisch entmischt. Dies führt zu Inhomogenitäten mit nicht reproduzierbaren Zusammensetzungen einzelner aus dem Gebinde entnommener Portionen.

Nach dem Stand der Technik ergibt sich als Aufgabe der vorliegenden Erfindung die Bereitstellung einer gut verarbeitbaren Mischung für ein duromerbildendes Polymersystem (ein Duromeresystem) mit verbesserten mechanischen Eigenschaften nach dem Aushärten.

Diese Aufgabe wird gelöst durch eine Mischung für ein duromerbildendes Polymersystem, umfassend
(i) wenigstens eine flüssige Komponente des duromerbildenden Polymersystems,
(ii) einen mit dem duromerbildenden Polymersystem reaktiven Polyester und
(iii) einen nucleierenden Keimbildner für die Kristallisation des mit dem duromerbildenden Polymersystem reaktiven Polyesters,
wobei bei 20°C ≥ 10 Gew.-% der Gesamtmenge an mit dem duromerbildenden Polymersystem reaktiven Polyester in kristallinem Zustand und suspendiert vorliegt.

Dabei ist ein duromerbildendes Polymersystem im Sinne dieses Textes ein System, das bei der Aushärtung ein dreidimensionales Polymernetzwerk ergibt, so dass ein Duromer entsteht. Dabei kann es sich bei dem duromerbildenden Polymersystem um ein EinKomponenten-System oder ein Mehr-Komponenten-System, insbesondere ein Zwei-Komponenten-System handeln. Sofern es sich bei dem duromerbildenden Polymersystem um ein Zwei-Komponenten-System handelt, ist es möglich, dass die erfindungsgemäße Mischung auch nur eine Komponente für das Zwei-Komponenten-System darstellt.

Ein "nucleierender" Keimbildner im Sinne dieses Textes ist ein Keimbildner für eine Kristallisation, der in dem entstehenden Kristall auch tatsächlich eingebaut wird. Somit unterscheidet sich ein solcher Keimbildner von Kristallisationsausgangspunkten, wie z.B. Unebenheiten in Gefäßwänden.

In erfindungsgemäßen Mischungen liegt wenigstens ≥ 10 Gew.-% der Gesamtmenge an mit dem duromerbildenden Polymersystem reaktiven Polyester (auch als Reaktivpolymer oder reaktiver Polyester bezeichnet), bevorzugt ≥ 15 Gew.-%, weiter bevorzugt ≥ 20 Gew.-% und besonders bevorzugt ≥ 25 Gew.-% an mit dem duromerbildenden Polymersystem reaktiven Polymerester in kristallinem Zustand und suspendiert vor.

Dabei umfassen die Kristalle des reaktiven Polyesters überwiegend einen Kristallisationskeim aus dem (nucleierenden) Keimbildner. Überwiegend bedeutet zu ≥ 50 %, weiter bevorzugt ≥ 60 % und besonders bevorzugt ≥ 75 % bezogen auf die Gesamtzahl der Kristalle des mit dem duromerbildenden Polymersystem reaktiven Polyesters.

Selbstverständlich stellt der Fachmann die erfindungsgemäße Mischung so ein, dass eine ausreichende Menge an flüssigen Komponenten für die Herstellung der Suspension vorhanden ist.

Wie oben beschrieben liegen in der erfindungsgemäßen Mischung bei 20°C die vorgenannten Anteile der Gesamtmenge an mit dem duromerbildenden Polymersystem reaktiven Polyester in kristallinem Zustand vor.

Ein mit dem duromerbildenden Polymersystem "reaktiver Polyester" ist im Zusammenhang mit dieser Beschreibung ein Polyester, der bei der Vernetzung des Polymersystems durch kovalente Bindung durch das Polymersystem eingebaut wird. Bevorzugt ist in diesem Zusammenhang, dass der reaktive Polyester dabei auch aktiv vernetzende Funktionen übernimmt, in dem er mit mehr als einer mit dem Polymersystem reaktiven Gruppe ausgestattet ist.

Überraschend hat sich gezeigt, dass durch den Zusatz von Stoffen, die als Kristallisationskeim dienen (nucleierende Keimbildner), der mit dem duromerbildenden Polymersystem reaktive Polyester (Reaktivpolymer) in sehr feinen Kristalliten ausfällt, welche sich nicht mehr von der Harzzusammensetzung separieren bzw. leicht und homogen wieder aufgerührt werden können. Insbesondere kommt es nicht zur Abscheidung großer Kristallite an der Gebindewand und auch im Gebinde.

Besonders bevorzugt handelt es sich bei dem nucleierenden Keimbildner um einen Stoff, welcher eine um 5°C, bevorzugt ≥ 10°C höhere Schmelztemperatur aufweist als das Reaktivpolymer.

Bevorzugt ist dabei, dass der nucleierende Keimbildner ein weiterer bei 20°C wenigstens teilkristalliner Polyester ist. Dieser Polyester muss nicht zu Reaktionen mit der Harzzusammensetzung befähigt sein, darf es aber. Im letzten Fall wird als "Keimbildner" im Sinne des vorliegenden Textes der Polyester definiert, der den höchsten Schmelzpunkt besitzt. Dieser Polyester wird bei Mengen- und Anteilangaben, die sich auf das Reaktivpolymer beziehen, definitionsgemäß nicht mitgezählt. Bevorzugte als Kristallisationskeim/Nukleierungsmittel wirkende teilkristalline Polyester sind Polyadipate und besonders bevorzugt ist Poly(1,10-decandioladipat).

Bei dem Reaktivpolymer (mit dem duromerbildenden Polymersystem reaktiver Polyester) handelt es sich ebenfalls um einen Polyester und besonders bevorzugt um Poly(ε-caprolacton) mit reaktiven Gruppen, üblicherweise Endgruppen an der Polymerkette, welche in der Lage sind mit der Harzzusammensetzung zu reagieren. Die reaktiven Gruppen können auch entlang der Polymerkette angeordnet sein, was dann bevorzugt ist wenn eine hohe Zahl reaktiver Gruppen benötigt wird. Allerdings muss darauf geachtet werden, dass das Polymer noch kristallisationsfähig ist, da fremde Gruppen in der Kette die Kristallisationsfähigkeit herabsetzen können.

Um eine feine Verteilung des festen, teilkristallinen Reaktivpolymers zu erreichen, wird es bevorzugt gemeinsam mit dem nucleierenden Keimbildner in mindestens einer Komponente der Harzzusammensetzung aufgeschmolzen und dann wieder abgekühlt. Die Komponente der Harzzusammensetzung wird so gewählt, dass es bei diesem Vorgang noch nicht zu einer Härtungsreaktion kommen kann. Die Menge der teilkristallinen Reaktivkomponente wird so gewählt, dass in dieser Zubereitung mindestens 10 Gew.-% des eingesetzten teilkristallinen Reaktivpolymers bei Raumtemperatur (20°C) als Feststoff vorliegen. Dies ist so definiert, dass nach einer Lagerung der Zubereitung von mindestens 24 Stunden bei 20 °C mit Dynamischer Differenzkalorimetrie (DSC) eine Schmelzenthalpie bestimmt wird und diese mindestens 10 % der Schmelzenthalpie beträgt die rechnerisch erwartet würde, wenn 100 % des enthaltenen teilkristallinen Reaktivpolymers kristallisiert wären. Der Basiswert von 100 % ist bezogen auf die Schmelzenthalpie des reinen teilkristallinen Reaktivpolymers nach einer Lagerung von mindestens 24 Stunden bei 20 °C. Polymere sind nicht zu 100 % kristallin und durch die gegebene Definition wird ein praxisrelevanter Wert gegeben.

Das teilkristalline Reaktivpolymer wird gegenüber dem Keimbildner bevorzugt im Überschuss eingesetzt. Nach Gewichtsteilen beträgt das Verhältnis Reaktivpolymer zu Keimbildner bevorzugt 55 : 45 bis 99,5 : 0,5. Weiter bevorzugt 80 : 20 bis 95 : 5.

Das teilkristalline Reaktivpolymer weist bevorzugt mindestens zwei Gruppen auf die mit der Harzmatrix reagieren können, üblicherweise liegen 2 - 50, bevorzugt 2 - 20 und besonders bevorzugt 2 - 10 reaktive Gruppen nominell in jedem Molekül des teilkristallinen Reaktivpolymers vor. Selbstverständlich kann herstellungsbedingt die Zahl der Gruppen einer Verteilungsstatistik unterliegen oder es können kleine Anteile Reaktivpolymer vorliegen, bei welchen z.B. durch Nebenreaktionen die Zahl der reaktiven Gruppen kleiner 2 ist. Üblicherweise ist der Gehalt solcher Nebenprodukte kleiner als etwa 3 Gew.-%.

Die Molmassen der teilkristallinen Reaktivpolymere sind bevorzugt so hoch, dass das Polymer bei 20 °C kristallisationsfähig ist. Polymere kristallisieren nie vollständig und kristallisationsfähig bedeutet, dass mittels DSC (Dynamic Scanning Calometry) ein Schmelzpeak feststellbar ist. Bei den typischen kristallisationsfähigen Reaktivpolymeren liegen die minimalen Molmassen (Massenmittel) bei denen diese Voraussetzung gegeben ist bei etwa 500 bis 1.000 g/mol. Die obere, mittlere Molmasse ist prinzipiell nicht begrenzt. Damit das Polymer aber in hinreichend kurzer Zeit schmelzbar ist, sich in der Harzmatrix verteilen kann und die Viskosität der fertigen Formulierung nicht zu hoch wird, ist die Molmasse bevorzugt auf einige 100.000 g/mol (d.h. 200.000 g/mol - 800.000 g/mol, bevorzugt 200.000 g/mol - 500.000 g/mol, besonders bevorzugt 200.000 g/mol - 300.000 g/mol) als Maximalwert beschränkt. Im Falle von Polyestern als Reaktivpolymere (mit dem duromerbildenden Polymersystem reaktive Polyester) soll das Massenmittel der Molmasse zwischen 500 g/mol und 100.000 g/mol liegen. Ein bevorzugter teilkristalliner Polyester ist Poly(ε-caprolacton) mit mittleren Molekulargewichten zwischen 1.000 g/mol und 50.000 g/mol, besonders bevorzugt ein Molekulargewicht von 1.000 g/mol bis 10.000 g/mol.

Wenn die Härtung der Harzzubereitung bei Temperaturen unterhalb der Schmelztemperatur des teilkristallinen Reaktivpolymers erfolgt, bleiben die Kristallite im Duromer erhalten und bilden über die reaktiven Gruppen eingebundene Domänen (eigene Phase). Dies ist insbesondere bei einer photochemischen Härtung oder bei einer Härtung mit Komponenten, welche keine thermische Aktivierung benötigen, der Fall. Wenn das teilkristalline Reaktivpolymer homogen im Duromer verteilt sein soll erfolgt die Härtung oberhalb der Schmelztemperatur des teilkristallinen Reaktivpolymers.

Geeignete und für bestimmte Anwendungen bevorzugte Harzzusammensetzungen basieren auf kationisch härtenden Epoxidharzen, welche, nach dem Stand der Technik mit bekannten, latenten Initiatoren thermisch oder photochemisch gehärtet werden. Diese basieren meist auf cycloaliphatischen Epoxidharzen, aber auch aromatische Epoxidharze sind gebräuchlich. Das cycloaliphatische Epoxidmonomer 3,4-Epoxycyclohexylmethyl-3',4'-epoxycyclohexancarboxylat mit zwei Epoxidgruppen pro Molekül lässt sich über eine kationische Polymerisation zu einem transparenten Duromer aushärten. Hierfür sind kommerzielle Initiatoren verfügbar, die thermisch oder durch UV-Licht unter Bildung einer Supersäure zerfallen und durch die Säure die kationische Polymerisation initiieren. Üblicherweise sind die so erhaltenen Polymere transparente, spröde Materialien mit hohem Vernetzungsgrad und hoher Glasübergangstemperatur. Für die Anwendung, z.B. als Klebstoff oder Vergussmasse, ist eine Zähelastifizierung nötig um die Sprödigkeit zu verringern und gute Materialeigenschaften zu erhalten. Materialanforderungen sind dabei weiterhin eine hohe Glasübergangstemperatur und eine gleichzeitig hohe Bruchspannung bei geringer Sprödigkeit.

Zur Zähelastifizierung werden üblicherweise flüssige Polyole, also Polymere mit mehreren Alkoholgruppen eingesetzt, welche die Vernetzungsdichte des Duromers herab setzen. Hierbei wird die Glasübergangstemperatur in ungewünschter Weise abgesenkt und die Bruchspannung verringert. Gewünscht ist allerdings eine hohe Bruchspannung bei gleichzeitig geringer Sprödigkeit.

Dies kann erfindungsgemäß erreicht werden, wenn ein teilkristallines Reaktivpolymer zusammen mit dem nucleierenden Keimbildner in das Epoxidharz gegeben wird, wobei die festen Komponenten aufgeschmolzen werden, um dann nach dem Abkühlen feine Kristallite im Epoxidharz zu bilden. Bevorzugt wird hierbei langsam abgekühlt (≤ 2°C/min, bevorzugt ≤ 0,5°C/min, besonders bevorzugt ≤ 0,2°C/min). Der Härtungsinitiator (Vernetzungsinitiator) wird erst nach dem Abkühlen bzw. einer Temperatur zugegeben bei der er noch nicht initiiert, um eine vorzeitige Aushärtung zu verhindern. Die Aushärtung erfolgt bevorzugt thermisch oder photochemisch induziert, je nach zugesetztem Initiator. Nach dem Stand der Technik ist auch bekannt, dass Photoinitiatoren durch die Zugabe von Redoxkomponenten, z.B. Ascorbinsäurehexadecanat so aktiviert werden können, dass eine thermische Härtung möglich wird.

Das (bei 20°C wenigstens teilkristalline) Reaktivpolymer umfasst bevorzugt als mit dem Polymersystem reaktive Gruppen Alkoholgruppen oder Epoxidgruppen, um in das Polymernetzwerk kovalent eingebunden zu werden. Je nach Härtungsart bleiben die Kristallite im ausgehärteten Duromer erhalten (insbesondere bei photochemischer Härtung bei Raumtemperatur) oder das teilkristalline Reaktivpolymer ist homogen im Duromer verteilt (insbesondere bei thermischer Härtung oberhalb der Schmelztemperatur des teilkristallinen Reaktivpolymers). Die erfindungsgemäße Mischung sorgt dabei dafür, dass in beiden Fällen eine sehr homogene Verteilung des Reaktivpolymers (des mit dem duromerbildenden Polymersystem reaktiven Polyesters) vorliegt. Selbstverständlich wird der Fachmann bei der Vorbereitung der Aushärtung (der Polymerisation/Vernetzung) darauf achten, dass wenigstens eine der Komponenten für das Polymersystem tatsächlich eine erfindungsgemäße Mischung darstellt, das heisst insbesondere, dass ≥ 10 Gew.-% der Gesamtmenge an mit dem duromerbildenden Polymersystem reaktiven Polyester in kristallinem Zustand und suspendiert vorliegen. Hierzu sind im Zweifelsfall geeignete Mischungsmaßnahmen, wie z.B. Rühren vorzunehmen, was insbesondere dann sinnvoll ist, falls sich Teile des mit dem duromerbildenden Polymersystem reaktiven Polyesters beispielsweise aufgrund langer Standzeit in der Mischung abgesetzt haben.

Insbesondere Poly(ε-caprolacton) (CAPA, Perstorp Polyols), Polycarbonat (Oxymer, Perstorp Polyols) und Polyadipate (Dynacoll, Evonik Industries AG) zeigten im Epoxidpolymer verbesserte Eigenschaften, verglichen mit dem reinen Epoxidpolymer.

Besonders bevorzugt waren hier die Poly(ε-caprolactone) mit mittleren Molekulargewichten (Massenmittel) zwischen 1.000 und 50.000 g/mol. Noch bevorzugter ein Molekulargewicht von 1.000 bis 10.000 g/mol.

Die teilkristallinen Polyester wurden in 0,1 bis 85 Gewichtsprozent (Gew.-%) in das Epoxid eingearbeitet. Bevorzugt wurde ein Polyestergehalt zwischen 1 und 35 Gew.-% und besonders bevorzugt zwischen 5 und 35 Gew.-%, verwendet. Solche Mischungen sind auch bevorzugte Komponenten (i) und (ii) für die erfindungsgemäßen Mischungen.

Derartige Mischungen (ohne erfindungsgemäße Komponente (iii)) scheiden den teilkristallinen Polyester aber unkontrolliert als separate Phase aus und die so erhaltenen, nicht reproduzierbar entmischten Systeme sind für eine technische Anwendung nicht geeignet. Durch die erfindungsgemäße Zugabe eines Keimbildners konnte die nicht reproduzierbare, makroskopische Entmischung vermieden werden und es bildeten sich reproduzierbar kleine Kristallite, die nur sehr langsam sedimentierten und leicht wieder aufgerührt werden konnten. Besonders geeignet zeigte sich in diesem und anderen Systemen Poly(1,10-decandioladipat) mit einem hohen Schmelzpunkt als Kristallisationskeim für teilkristallines Poly(ε-caprolacton).

Anhand von DSC zeigte sich beim Abkühlen dieser Polyestermischung aus der Schmelze zuerst das Auskristallisieren des Poly(1,10-decandioladipat) und anschließend eine erhöhte Kristallisationstemperatur des Poly(ε-caprolacton). Weitere Untersuchungen zeigten, dass sich zuerst Kristallisationskeime (nucleierende Keimbildner) durch das Poly(1,10-decandioladipat) bilden und dann die Kristallisation des Poly(ε-caprolacton) an diesen Kristallisationskeimen beschleunigt abläuft. Durch reines Poly(ε-caprolacton) im Epoxidmonomer wurden große sphärolitische Strukturen erhalten, was unerwünscht ist, da sich dadurch eine zu grobe Struktur ausbildete, das Material auch an der Gebindewand anhaftet und schnell sedimentiert. Durch die Zugabe des Poly(1,10-decandioladipat) wurde hingegen ein feinkristallines Material ohne erkennbare Sedimentationsneigung erhalten. Insbesondere geeignet erwies sich eine Mischung aus 10 Gew.-% 1,10-Decandiolpolyadipat und 90 Gew.-% Poly(ε-caprolacton). Bevorzugt wurden die Molekulargewichte von 2000 g/mol für das Poly(1,10-decandioladipat) und 4000 g/mol für das Poly(ε-caprolacton) verwendet. Das Poly(1,10-decandioladipat) zeigte eine Schmelztemperatur von 68 °C und eine Schmelzenthalpie von 132,2 J/g. Das Poly(ε-caprolacton) zeigte eine Schmelztemperatur von 56 °C und eine Schmelzenthalpie von 87 J/g.

In das flüssige Epoxidmonomer können die erfindungsgemäß einzusetzenden Komponenten (ii) und (iii) durch Aufschmelzen und Verrühren eingearbeitet werden. Die kristallisierenden Mischungen können durch UV-Licht als Film gehärtet werden oder thermisch durch Erwärmen der Mischung. Hierzu sind kommerzielle Initiatoren verfügbar. Die thermische Polymerisation wurde bevorzugt zwischen 60 °C und 180 °C initiiert. Noch bevorzugter zwischen 80 °C und 140 °C und besonders bevorzugt zwischen 100 °C bis 120 °C.

Als thermischer Initiator eignet sich z.B. Benzyltetrahydrothiophenium hexafluoroantimonat, der die kationische Polymerisation thermisch nach DSC-Untersuchungen mit einer Heizgeschwindigkeit von 10 K/min bei 110 °C initiiert und ebenfalls über UV-Licht initiierbar war.

Durch die kalte UV-Härtung wird die kristalline Phase nicht wieder aufgeschmolzen und im fertigen Polymer fixiert. Somit wird eine phasenseparierte Struktur erhalten, in der die Eigenschaften des Duromernetzwerkes nur wenig beeinflusst werden und eine zweite Phase aus teilkristallinem Polyester vorliegt. Hierbei wurde ein erhöhter Schmelzpunkt der Polyesterphase im gehärteten Epoxidpolymer beobachtet.

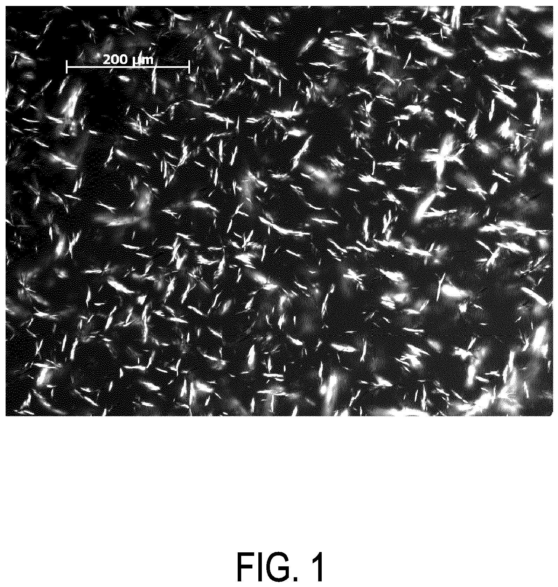

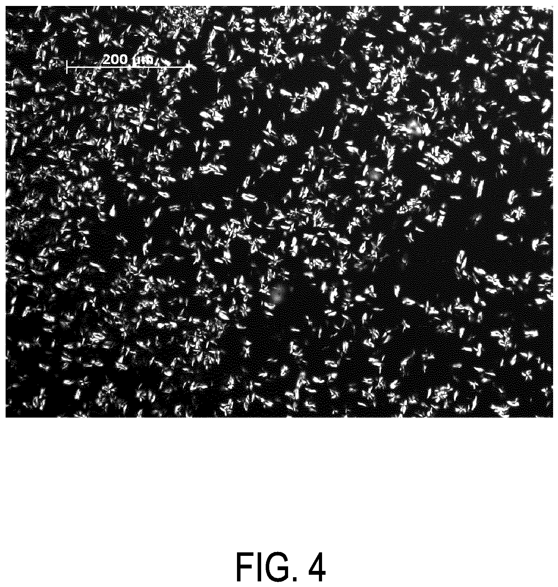

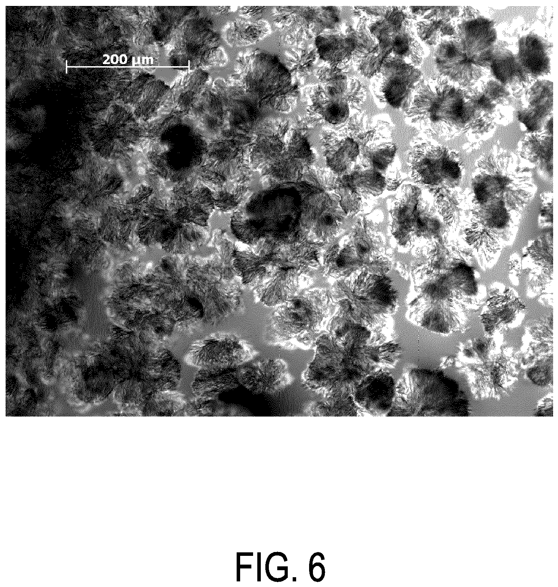

Die hergestellten Polymere zeigten im Polarisationsmikroskop fein verteilte Strukturen der Polyestermischung und keine großen Sphärolithstrukturen (Figuren 1 bis 3). Demgegenüber weisen die Figuren 4 bis 6, die analoge Mischungen ohne nucleierenden Keimbildner zeigen, eine wesentlich inhomogenere Strukturverteilung auf.

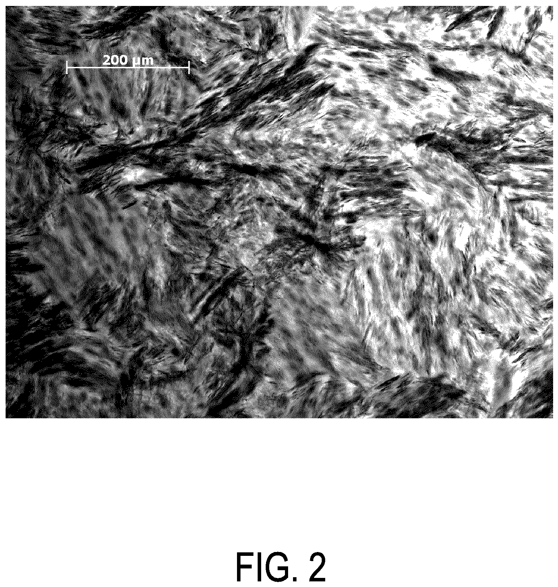

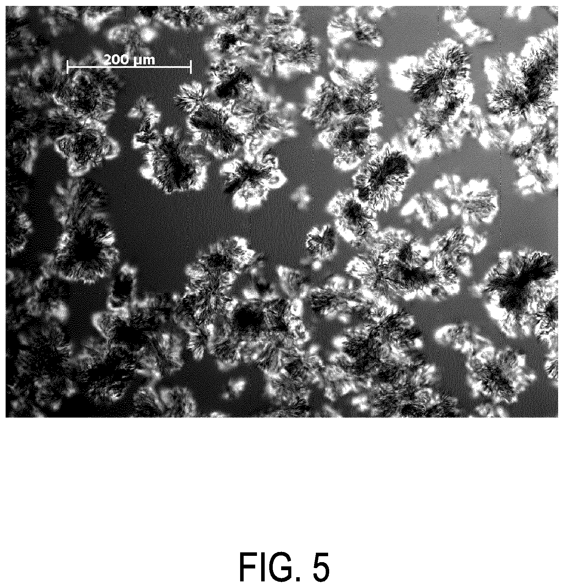

Hierbei bilden die Abbildungen 1 bis 6 Polarisationsmikroskopieaufnahmen der ungehärteten Mischungen aus Beispiel 1 bis 3 (Figuren 1 bis 3) sowie aus den Vergleichsbeispielen 1 bis 3 (Figuren 4 bis 6) ohne Keimbildner, jeweils nach dem Auskristallisieren in zehnfacher Vergrößerung ab. Bei einem Vergleich der jeweils analogen Beispiele (Figur 1 und 4, Figur 2 und 5 und Figur 3 und 6) zeigt sich, dass sich in den erfindungsgemäßen Mischungen makroskopisch eine deutlich höhere Homogenität vorliegt. So zeigt z.B. Figur 2 verglichen zu Figur 5 eine viel geringere Entmischung während in Figur 4 verglichen zu Figur 1 weniger deutlichere Phasengrenzen aufweist. Letzteres ist durch die Kontraste gut zu erkennen.

DSC-Untersuchungen zeigten, dass das Aufschmelzen und Rekristallisieren der Polyesterphase im fertig ausgehärteten Epoxidpolymer reversibel erfolgen kann. Separate Phasen bilden sich typischerweise bei der Photohärtung bei Raumtemperatur bzw. unterhalb der Schmelztemperatur der Polyesterphasen.

Zur Charakterisierung der mechanischen Eigenschaften wurde dynamisch mechanische Analyse (DMA) verwendet. Es zeigte sich bei den photochemisch gehärteten und separate Polyesterphasen beinhaltende gehärtete Epoxidharze ein hoher Speichermodul bis zur Schmelztemperatur der Polyesterphase bei ca. 60 °C. Der Glasübergang der Epoxidphase, der über den Tangens Delta bestimmt wurde, zeigte keine Erniedrigung durch Zugabe der Polyester, da die Epoxidphase separiert von der Polyesterphase vorlag. Wie in vielen Anwendungen gewünscht bleibt somit der hohe Glasübergang des Epoxids erhalten.

Die meisten Epoxide härten durch eine Polyadditionsreaktion, d.h. an die Epoxidfunktionalität werden Härter welche z.B. Amino-, Mercapto-, Anhydrid- oder Carbonsäuregruppen enthalten addiert. Die mechanischen Eigenschaften derartiger Harzzusammensetzungen lassen sich überraschenderweise erfindungsgemäß durch ein kristallisationsfähiges (kristallines oder teilkristallines) Reaktivpolymer in Kombination mit einem nucleierenden Keimbildner verbessern. Insbesondere ist auf eine gleichzeitige Verbesserung von Zugfestigkeit und Reißdehnung hinzuweisen. Hierzu beinhaltet das Reaktivpolymer eine Gruppe, die bei der Härtung der Harzzusammensetzung mit mindestens einer der Komponenten reagiert. Insbesondere sind hierfür Epoxy-, Amino-, Mercapto-, Anhydrid- und Carbonsäuregruppen bevorzugt. Aber auch starke Basen wie Imidazole sind als Härter und auch Dicyandiamid als latenter, fester Härter geeignet. Es bildet sich eine erfindungsgemäße Mischung (Harzzusammensetzung) in der das Reaktivpolymer fein verteilt als kristalliner Feststoff vorliegt und somit weder sedimentiert noch an den Behälterwänden anhaftet.

Bei der Zubereitung muss darauf geachtet werden, dass es nicht frühzeitig zur (Polymerisierungs-)Reaktion kommt. Wenn das Reaktivpolymer eine Epoxidgruppe aufweist, wird es zunächst bevorzugt mit der Epoxidkomponente verarbeitet, bevor es vor der Härtungsreaktion mit den Härterkomponenten gemischt wird. Umgekehrt wird das Reaktivpolymer zunächst bevorzugt mit den Härterkomponenten gemischt, wenn es Gruppen beinhaltet welche mit der Epoxidgruppe reagieren können. Letztendlich ist ein entsprechendes Mischen nicht zwingend, es kommt lediglich darauf an, dass das Reaktivpolymer (der mit dem duromerbildenden Polymersystem reaktive Polyester) nicht schon unkontrolliert mit einer der Komponenten des Polymersystems reagiert. Letzteres kann der Fachmann auch durch eine Kontrolle der Temperatur bzw. der Bestrahlungssituation gewährleisten und/oder durch ein späteres Zugeben von Polymerisierungsinitatoren.

Das Reaktivpolymer basiert bevorzugt auf einem Polyester, besonders bevorzugt auf Poly(ε-caprolacton). Bei dem Keimbildner handelt es sich bevorzugt um einen Polyester mit höherer Schmelztemperatur als das Reaktivpolymer.

Wie bereits oben angedeutet, ist es grundsätzlich wünschenswert, dass der nucleierende Keimbildner eine höhere Schmelztemperatur besitzt als der mit dem duromerbildenden Polymersystem reaktive Polyester (kristallisationsfähiges Reaktivpolymer). Bevorzugt liegt die Schmelztemperatur des Keimbildners ≥ 5°C, weiter bevorzugt ≥ 10°C und besonders bevorzugt ≥ 12°C höher als die für das Reaktivpolymer. Dabei ist es aber für viele Anwendungen bevorzugt, dass die Differenz zwischen den beiden Schmelzpunkten nicht zu hoch ist. Somit ist es bevorzugt, dass die Differenz in den Schmelzpunkten ≤ 100°C, bevorzugt ≤ 75°C, weiter bevorzugt ≤ 50°C und besonders bevorzugt ≤ 40°C beträgt. Dementsprechend sind bevorzugte Schmelztemperaturdifferenzbereiche zwischen dem Reaktivpolymer und dem nucleierenden Keimbildner 5 bis 100°C, bevorzugt 10 bis 75°C und weiter bevorzugt 12 bis 50°C, wobei die Schmelztemperatur des nucleierenden Keimbildners jeweils die höhere ist.

Wenn es sich bei der Harzzusammensetzung um ein Polyurethan handelt, wird analog vorgegangen. Wenn das Reaktivpolymer Alkohol-, Carbonsäure- oder Mercaptogruppen aufweist, wird es bevorzugt mit der Polyolkomponente formuliert und der Isocyanathärter erst kurz vor der Härtungsreaktion zugegeben. Dies ist die besonders bevorzugte Variante. Es ist aber auch möglich das Reaktivpolymer zunächst mit Isocyanatgruppen zu funktionalisieren und dann der Isocyanatkomponente zuzugeben. Dies erfolgt z.B. durch Umsetzen eines Reaktivpolymers welches Alkoholgruppen beinhaltet mit dem Überschuss eines Diisocyanates oder Isocyanates mit mehr als zwei Isocyanatgruppen, z.B. Hexandiisocyanat, Isophorondiisocyanat, Diphenylmethandiisocyanat oder Toluylendiisocyanat. Um ein vernetztes Polyurethan zu erhalten ist es notwendig, eine Alkoholkomponente mit mindestens drei Alkoholgruppen zuzusetzen. Die Reaktivkomponente basiert ebenfalls bevorzugt auf einem Polyester, besonders bevorzugt auf Poly(ε-caprolacton). Bei dem Keimbildner handelt es sich bevorzugt um einen Polyester mit höherer Schmelztemperatur als das Reaktivpolymer. Dabei gilt für die Schmelztemperaturdifferenzen das oben Gesagte analog.

Für eine Reihe von Situationen ist es bevorzugt, wenn das duromerbildende Polymersystem, für das die erfindungsgemäße Mischung geeignet ist, kein PolyurethanSystem ist.

Die Erfindung kann auch vorteilhaft bei radikalisch härtenden Harzzusammensetzungen eingesetzt werden. Solche Harzzusammensetzungen basieren auf Stoffen welche polymerisationsfähige Doppelbindungen beinhalten, insbesondere Acrylate, Methacrylate und Vinylverbindungen. Solche Harzzusammensetzungen werden mit radikalischen Photoinitiatoren, z.B. Benzyldimethylketal, oder mit thermisch aktivierbaren Initiatoren, z.B. Peroxiden, gehärtet, wobei die Härtungsreaktion durchaus auch bei Raumtemperatur ablaufen kann, wenn man entsprechend reaktive Peroxide wählt oder mit nach dem Stand der Technik an sich bekannten Aktivatoren beschleunigt. Die Härtung bei Raumtemperatur oder nur leicht erhöhter Temperatur unterhalb der Schmelztemperatur ist dann bevorzugt, wenn die Polymerkristallite in der gehärteten Harzzusammensetzung erhalten bleiben sollen. Wenn das Reaktivpolymer nach der Härtungsreaktion hingegen homogen verteilt in der Harzzusammensetzung vorliegen soll, wird der Härtungsinitiator so gewählt, dass für die Härtungsreaktion eine Temperatur oberhalb der Schmelztemperatur des Reaktivpolymers benötigt wird. Im Falle radikalisch härtender Harzzusammensetzungen beinhaltet das Reaktivpolymer radikalisch polymerisierbare Gruppen, welche bevorzugt den polymerisationsfähigen Gruppen der Harzzusammensetzung entsprechen. D.h. im Falle von ungesättigten Polyestern handelt es sich bevorzugt um Vinylgruppen, bei Harzzusammensetzungen auf der Basis von Acrylaten um Acrylatgruppen und bei Methacrylaten bevorzugt um Methacrylatgruppen. Auch Kombinationen sind ohne weiteres möglich, sofern man die unterschiedlichen Polymerisationsgeschwindigkeiten der Gruppen in Kauf nehmen möchte. Die Reaktivkomponente basiert auf einem Polyester, besonders bevorzugt auf Poly(ε-caprolacton). Bei dem nucleierenden Keimbildner handelt es sich bevorzugt um einen Polyester mit höherer Schmelztemperatur als das Reaktivpolymer. Zu den Schmelztemperaturunterschieden zwischen nucleierendem Keimbildner und Reaktivkomponente (mit dem duromerbildenden Polymersystem reaktiver Polyester) gilt das oben Gesagte analog.

Die Erfindung betrifft ferner ein Bauteil hergestellt oder herstellbar unter Verwendung einer erfindungsgemäßen Mischung. Ein erfindungsgemäßes Bauteil kann die vorteilhaften Eigenschaften, welche durch den erfindungsgemäßen Einsatz des nucleierenden Keimbildners für die Kristallisation des mit dem duromerbildenden Polymersystem reaktiven Polyesters verliehen wurden, haben. Bevorzugt ist ein erfindungsgemäßes Bauteil, umfassend kristalline Domänen aus dem mit dem duromerbildenden Polymersystem reaktiven Polyester, welche kovalent an das vernetzte Duromer, angebunden sind.

Wie bereits oben angedeutet, entstehen solche bevorzugten erfindungsgemäßen Bauteile mit kristallinen Domänen (Kristalliten) dann, wenn zum Zeitpunkt der Vernetzung noch die erfindungsgemäße Mischung vorliegt, d.h. wesentliche Teile des Reaktivpolymers als (suspendierte) Kristalle vorliegen.

Alternativ bevorzugt kann sein ein erfindungsgemäßes Bauteil, umfassend den mit dem duromerbildenden Polymersystem reaktiven Polyester, welcher kovalent an das vernetzte Duromer, angebunden ist, homogen verteilt in der Phase des Duromers.

Diese Form von erfindungsgemäß bevorzugten Bauteilen entsteht dann, wenn der mit dem duromerbildenden Polymersystem reaktive Polyester zum Zeitpunkt der Polymerisierungs-/Aushärtungs-Reaktion aufgeschmolzen ist. In letzterem Falle liegt dann ein Einphasensystem vor, während im vorgenannten Falle die Kristallite eine eigene Phase innerhalb des vernetzten Polymers darstellen.

Bevorzugt ist das erfindungsgemäße Bauteil ein Faserverbundwerkstoff, besonders bevorzugt ein kohlenfaserverstärkter Verbundwerkstoff, ein Dentalmaterial (insbesondere Kunststofffüllungen und Stumpfaufbaumaterialien), eine Prothese oder ein Prothesenteil, eine Bauteilgruppe für mechanisch belastete Systeme, wie z.B. Bremskolben, Pumpen, Zahnriemenscheiben oder ein Bauteil, welches die erfindungsgemäßen Materialien als Klebstoff, Vergussmasse oder Beschichtung umfasst.

Neben den Basiskomponenten für die verschiedenen Harzzusammensetzungen und den Reaktivpolymeren können die erfindungsgemäßen Mischungen (und somit auch die daraus hergestellten Bauteile) selbstverständlich weitere Komponenten enthalten, welche nach dem Stand der Technik für die Formulierung typisch sind bzw. für die gewünschte Anwendung weitere geeignete Eigenschaften vermitteln. Exemplarisch seien Additive genannt, z.B. Haftvermittler, Antioxidantien, Brandschutzmittel, Verlaufmittel, Entlüfter, Schaumverhinderer, Härtungsinitiatoren und -beschleuniger. Ebenfalls typisch sind mikro- und nanoskalige Füllstoffe, wie z.B. Kreide, Siliciumdioxid, Metallpulver oder Fasern. Auch weitere Polymere können zugegeben werden, diese können z.B. der Einstellung der Viskosität dienen, die mechanischen Eigenschaften weiter beeinflussen oder den Härtungsschrumpf weiter reduzieren.

Teil der Erfindung ist auch eine Verwendung einer erfindungsgemäßen Mischung zur Herstellung eines erfindungsgemäßen Bauteils und/oder als Klebstoff, Vergussmasse, Beschichtung, Dentalmaterial oder Matrixharz für Verbundwerkstoffe, bevorzugt Faserverbundwerkstoffe, besonders bevorzugt kohlefaserverstärkte Faserverbundwerkstoffe.

Wie bereits oben angedeutet, ist durch den Einsatz der erfindungsgemäßen Mischung eine sehr weitgehende homogene Verteilung des mit dem duromerbildenden Polymersystem reaktiven Polyesters gewährleistet. Dies vermeidet Inhomogenitäten in dem ausgehärteten Polymer und somit Bereiche, in denen die gewünschten Eigenschaften abgeschwächt sind.

Teil der Erfindung ist auch ein Verfahren zur Herstellung einer erfindungsgemäßen Mischung, umfassend die Schritte
a) Bereitstellen wenigstens einer flüssigen Komponente für ein duromerbildendes Polymersystem,
b) Bereitstellen eines mit dem duromerbildenden Polymersystem reaktiven Polyesters, der bei 20°C zu ≥ 10 Gew.-% seiner Gesamtmenge (in der resultierenden Mischung nach Schritt d)) in kristallinem Zustand vorliegt bzw. vorliegen würde,
c) Bereitstellen eines Keimbildners für die Kristallisation des mit dem duromerbildenden Polymersystem reaktiven Polyesters und
d) Mischen der bereitgestellten Komponenten, so dass ≥ 10 Gew.-% der Gesamtmenge an mit dem duromerbildenden Polymersystem reaktiven Polyester in kristallinem Zustand und suspendiert vorliegt.

Wie bereits oben beschrieben, ist zum Herstellen der erfindungsgemäßen Mischung entscheidend, dass die genannte Menge an mit dem duromerbildenden Polymersystem reaktiven Polyester in kristallinem Zustand und suspendiert zu einem Zeitpunkt vorliegt, in dem die Vernetzungsreaktion noch nicht begonnen hat. Der Fachmann wird dabei durch geeignetes Mischungsverfahren und insbesondere durch eine Temperaturkontrolle (zum Beispiel indem die Komponenten die im Schritt b) und c) zugegeben werden), aufgeschmolzen und nachfolgend durch langsame Temperaturabkühlung zum Auskristallisieren gebracht werden, dafür sorgen, dass nicht zu große Kristallite entstehen, so dass eine Suspendierung noch möglich ist.

Dementsprechend ist es bevorzugt für das erfindungsgemäße Verfahren, dass der mit dem duromerbildenden Polymersystem reaktive Polyester zusammen mit dem Keimbildner und zusammen mit der oder in der wenigstens einen weiteren Komponente der Harzzusammensetzung aufgeschmolzen wird, unter Bedingungen, die so ausgewählt sind, dass weder die Vernetzung des duromerbildenden Polymersystems noch die Reaktion des mit dem duromerbildenden Polymersystem reaktiven Polyesters mit dem duromerbildenden Polymersystem erfolgt und nachfolgend die Mischung so abgekühlt wird, dass Kristalle aus dem mit dem duromerbildenden Polymersystem reaktiven Polyester entstehen.

Teil der Erfindung ist auch ein Verfahren zum Herstellen eines Bauteils, umfassend ein erfindungsgemäßes Verfahren zum Herstellen einer erfindungsgemäßen Mischung und nachfolgend den Schritt Vernetzen des duromerbildenden Polymersystems bei einer Temperatur, bei der (i) Kristalle aus dem mit dem duromerbildenden Polymersystem reaktiven Polyester kovalent an das Polymersystem angebunden werden oder bei der (ii) der mit dem duromerbildenden Polymersystem reaktive Polyester kovalent an das vernetzte Polymer homogen verteilt in der Phase des vernetzten Polymers angebunden wird.

Wie bereits oben beschrieben, sind die beiden alternativen Schritte in der Variante (i) und (ii) für "kalte" Vernetzungsverfahren, wie z.B. über UV-Licht (Variante (i)) oder "heiße", also thermische Vernetzung (Variante (ii)) besonders geeignet.

In der Variante (i), in der ein Zweiphasensystem entsteht, sind die Kristallite, die die zweite Phase bilden, sehr fein und homogen in der Polymermatrix verteilt. Somit lassen sich Eigenschaftssprünge innerhalb des Polymers vermeiden.

Die erfindungsgemäßen Mischungen lassen sich vielfältig anwenden. Bevorzugte Anwendungen sind als Klebstoff, Vergussmasse, Dentalmaterial Beschichtung oder Matrixharz für Verbundwerkstoffe, bevorzugt Faserverbundwerkstoffe, besonders bevorzugt kohlefaserverstärkte Faserverbundwerkstoffe.

### Beispiele

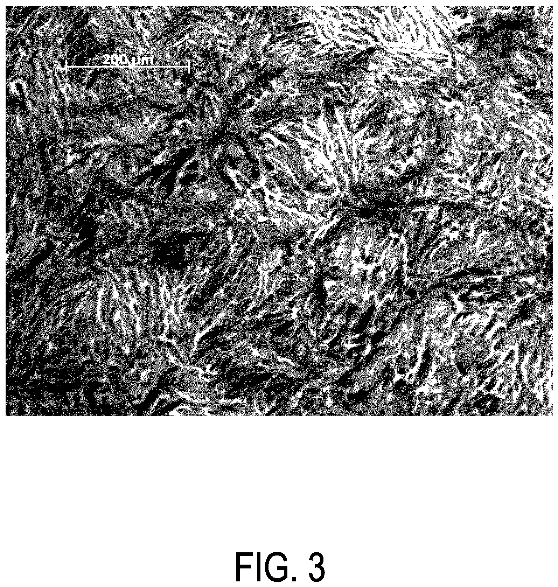

Beispiel 1: Mischung aus 90 Gew.-% Poly(ε-caprolacton) (Perstorp) mit einem Molekulargewicht (Massenmittel) von 4000 g/mol als Reaktivpolymer und 10 Gew.-% Poly(1,10-decandioladipat) mit einem Molekulargewicht von 2000 g/mol als Keimbildner mit einem Anteil von 9,1 Gew.-% im Gesamtsystem und 90,9 Gew.-% 3,4-Epoxycyclohexylmethyl-3',4'-epoxycyclohexancarboxylat (Omnilane OC1005, IGM Resins), welches 1 Gew.-% (bezogen auf die Menge des Epoxidharzes) Benzyltetrahydrothiophenium hexafluoroantimonat (Morio K, Murase H, Tsuchiya H. Thermoinitiated cationic polymerization of epoxy resins by sulfonium salts. J Appl Polym Sci 1986;32(7):5727-32) als kationischen Härtungsinitiator enthält. Die Mischung wurde bei 75 °C aufgeschmolzen, verrührt und für 24 Stunden bei 20 °C gelagert. Die Probe zeigte keine Sedimentation und kein Anwachsen des teilkristallinen Reaktivpolymers an der Gebindewand. Die breiartige Mischung zeigte unter dem Mikroskop eine feine Verteilung des teilkristallinen Reaktivpolymers. Fig. 1 zeigt anhand eines Polarisationsmikroskopbildes der ungehärteten Mischung die Feinteiligkeit der Kristallite.
**Beispiel 2:** Mischung aus 90 Gew.-% Poly(ε-caprolacton) mit einem Molekulargewicht von 4000 g/mol als Reaktivpolymer und 10 Gew.-% Poly(1,10-decandioladipat) mit einem Molekulargewicht von 2000 g/mol als Keimbildner mit einem Anteil von 16,7 Gew.-% im Gesamtsystem und 83,3 Gew.-% 3,4-Epoxycyclohexylmethyl-3',4'-epoxycyclohexancarboxylat, welches 1 Gew.-% (bezogen auf die Menge des Epoxidharzes) des Benzyltetrahydrothiophenium hexafluoroantimonat als kationischen Härtungsinitiator enthält. Die Mischung wurde bei 75 °C aufgeschmolzen, verrührt und für 24 Stunden bei 20 °C gelagert. Die Probe zeigte keine Sedimentation und kein Anwachsen des teilkristallinen Reaktivpolymers an der Gebindewand. Die breiartige Mischung zeigte unter dem Mikroskop eine feine Verteilung des teilkristallinen Reaktivpolymers. Fig. 2 zeigt anhand eines Polarisationsmikroskopbildes der ungehärteten Mischung die Feinteiligkeit der Kristallite.
**Beispiel 3:** Mischung aus 90 Gew.-% Poly(ε-caprolacton) mit einem Molekulargewicht von 4000 g/mol als Reaktivpolymer und 10 Gew.-% Poly(1,10-decandioladipat) mit einem Molekulargewicht von 2000 g/mol als Keimbildner mit einem Anteil von 23 Gew.-% im Gesamtsystem und 77 Gew.-% 3,4-Epoxycyclohexylmethyl-3',4'-epoxycyclohexancarboxylat, welches 1 Gew.-% (bezogen auf die Menge des Epoxidharzes) Benzyltetrahydrothiophenium hexafluoroantimonat als kationischen Härtungsinitiator enthält. Die Mischung wurde bei 75 °C aufgeschmolzen, verrührt und für 24 Stunden bei 20 °C gelagert. Die Probe zeigte keine Sedimentation und kein Anwachsen des teilkristallinen Reaktivpolymers an der Gebindewand. Die breiartige Mischung zeigte unter dem Mikroskop eine feine Verteilung des teilkristallinen Reaktivpolymers. Fig. 3 zeigt anhand eines Polarisationsmikroskopbildes der ungehärteten Mischung die Feinteiligkeit der Kristallite.
**Beispiele 4 bis 6:** Es wurden die Mischungen aus Beispiel 1 bis 3 hergestellt. Die Mischung wurde bei 75 °C unter Rühren aufgeschmolzen und als 150 µm dicker Film gerakelt. Der Film wurde für mindestens 8 Stunden bei Raumtemperatur auskristallisieren gelassen und anschließend durch UV-Licht mit 6 Watt Leistung im Abstand von 4 cm für 30 Minuten gehärtet. Unter diesen Bedingungen ist der Wärmeeintrag so gering, dass der teilkristalline Polyester nicht aufschmilzt. Die teilkristalline, phasenseparierte Struktur blieb erhalten und wurde in der Epoxidmatrix fixiert. Man erhielt trübe Polymerfilme die in DSC-Messungen das Schmelzen des teilkristallinen Reaktivpolymers zeigten. Die Glasübergangstemperatur der Epoxidphase wurde mit DMA bestimmt und blieb bei allen Konzentrationen an Reaktivpolymer konstant bei etwa 150 °C, dem Wert, den man auch für das reine gehärtete Epoxidharz beobachtet, wenn es unter diesen Bedingungen gehärtet wird.
   Alternativ wurden die Filme nach dem Rakeln thermisch für eine Stunde bei 145 °C gehärtet. Die Polymere zeigten im Gegensatz zu den Beispielen 4 bis 6 keine Trübung und wiesen in DSC-Messungen keine Schmelzenthalpien auf. Unter dem Polarisationsmikroskop wurden keine entmischten Strukturen gefunden. Der Glasübergang der Epoxidphase wurde mit DMA bestimmt und wurde durch die homogene Mischung mit dem Reaktivpolymer mit zunehmender Konzentration auf 144 °C, 127 °C und 103 °C abgesenkt.
**Vergleichsbeispiele 1 bis 3**: Es wurden Mischungen ohne Keimbildner aus 13, 23 und 31 Gew.-% Poly(ε-caprolacton) mit einem Molekulargewicht von 4000 g/mol als Reaktivpolymer und entsprechend 87, 77 und 69 Gew.-% 3,4-Epoxycyclohexylmethyl-3',4'-epoxycyclohexancarboxylat, in das zuvor 1 Gew.-% (bezogen auf die Menge des Epoxidharzes) des Benzyltetrahydrothiophenium hexafluoroantimonats als kationischer Härtungsinitiator eingerührt wurde, hergestellt. Diese Mischungen wurden bei 75 °C aufgeschmolzen, analog zu den Beispielen 1 bis 3 abkühlen gelassen, verrührt und für 24 Stunden bei 20 °C gelagert. Es zeigte sich eine grobe Abscheidung des teilkristallinen Reaktivpolymers aus dem Epoxidharz. Polarisationsmikroskopiebilder der ungehärteten Mischungen sind in Figuren 4, 5 und 6 dargestellt und zeigen, dass sich das kristalline Material inhomogen und grobteilig in dem Epoxidharz verteilt.
**Vergleichsbeispiele 4 bis 6:** Es wurden die Mischungen aus Vergleichsbeispiel 1 bis 3 hergestellt, bei 75 °C aufgeschmolzen und als Film auf Aluminiumfolie mit einer Dicke von 150 µm gerakelt. Die Filme wurde für mindestens 8 Stunden bei Raumtemperatur auskristallisieren gelassen und anschließend durch UV-Licht mit 6 Watt Leistung im Abstand von 4 cm für 30 Minuten gehärtet. Unter diesen Bedingungen ist der Wärmeeintrag so gering, dass der teilkristalline Polyester nicht aufschmilzt. Die polymerisierten Filme sind aufgrund der groben enthaltenen Kristallite mechanisch instabil und konnten keiner weiteren Messung unterzogen werden.

Die Proben ließen sich auch thermisch analog zu den Proben aus den Beispielen 4-6 polymerisieren. Aufgrund der großen enthaltenen Kristallite und den Aufwachsungen an den Behälterwänden war es aber nur mit großem Aufwand möglich repräsentative Proben der Reaktivmischung aus dem Vorratsgefäß zu entnehmen.

## Patentansprüche

1. Mischung für ein duromerbildendes Polymersystem, umfassend
(i) wenigstens eine flüssige Komponente des duromerbildenden Polymersystems,
(ii) einen mit dem duromerbildenden Polymersystem reaktiven Polyester und
(iii) einen nucleierenden Keimbildner für die Kristallisation des mit dem duromerbildenden Polymersystem reaktiven Polyesters,
wobei bei 20°C ≥ 10 Gew.-% der Gesamtmenge an mit dem duromerbildenden Polymersystem reaktiven Polyester in kristallinem Zustand und suspendiert vorliegt.

2. Mischung nach Anspruch 1, wobei der Keimbildner eine Schmelztemperatur ≥ 5 °C über der Schmelztemperatur des mit dem duromerbildenden Polymersystem reaktiven Polyesters besitzt und bevorzugt ein weiterer Polyester ist.

3. Mischung nach Anspruch 1 oder 2, wobei das Gewichtsverhältnis Keimbildner zu mit dem duromerbildenden Polymersystem reaktiven Polyester 0,5 : 99,5 - 45 : 55 beträgt.

4. Mischung nach einem der vorangehenden Ansprüche, wobei der mit dem duromerbildenden Polymersystem reaktive Polyester ein Polycaprolacton mit 2 bis 50, bevorzugt 2 bis 20 und besonders bevorzugt 2 bis 10 reaktiven Gruppen, besonders bevorzugt Alkoholgruppen ist.

5. Bauteil, hergestellt oder herstellbar aus oder unter Verwendung einer Mischung nach einem der vorangehenden Ansprüche.

6. Bauteil nach Anspruch 5, umfassend kristalline Domänen aus dem mit dem duromerbildenden Polymersystem reaktiven Polyester, welche kovalent an das vernetzte Polymer, bevorzugt ein Duromer angebunden sind.

7. Bauteil nach Anspruch 6, umfassend den mit dem duromerbildenden Polymersystem reaktiven Polyester, welcher kovalent an das Duromer, angebunden ist, homogen verteilt in der Phase des Duromers.

8. Verwendung einer Mischung nach einem der Ansprüche 1 bis 4 zur Herstellung eines Bauteils nach einem der Ansprüche 5 bis 7 und/oder als Klebstoff, Vergussmasse, Beschichtung, Dentalmaterial oder Matrixharz für Verbundwerkstoffe, bevorzugt Faserverbundwerkstoffe, besonders bevorzugt kohlefaserverstärkte Faserverbundwerkstoffe.

9. Verfahren zur Herstellung einer Mischung nach einem der Ansprüche 1 bis 4, umfassend die Schritte:
a) Bereitstellen wenigstens einer flüssigen Komponente für ein duromerbildendes Polymersystem,
b) Bereitstellen eines mit dem duromerbildenden Polymersystem reaktiven Polyesters, der bei 20°C zu ≥ 10 Gew.-% seiner Gesamtmenge in der resultierenden Mischung nach Schritt d) in kristallinem Zustand vorliegt,
c) Bereitstellen eines Keimbildners für die Kristallisation des mit dem duromerbildenden Polymersystem reaktiven Polyesters und
d) Mischen der bereitgestellten Komponenten, so dass ≥ 10 Gew.-% der Gesamtmenge an mit dem duromerbildenden Polymersystem reaktiven Polyester in kristallinem Zustand und suspendiert vorliegt.

10. Verfahren nach Anspruch 9, wobei der mit dem duromerbildenden Polymersystem reaktive Polyester zusammen mit dem Keimbildner und zusammen mit der oder in der wenigstens einen weiteren Komponente der Harzzusammensetzung aufgeschmolzen wird, unter Bedingungen, die so ausgewählt sind, dass weder die Vernetzung des duromerbildendes Polymersystems noch die Reaktion des mit dem duromerbildenden Polymersystem reaktiven Polyesters mit dem duromerbildenden Polymersystem erfolgt und nachfolgend die Mischung so abgekühlt wird, dass Kristalle aus dem mit dem duromerbildenden Polymersystem reaktiven Polyester entstehen.

11. Verfahren zur Herstellung eines Bauteils, umfassend ein Verfahren nach Anspruch 10 und nachfolgend den Schritt Vernetzen des duromerbildenden Polymersystems bei einer Temperatur, bei der (i) Kristalle aus dem mit dem duromerbildenden Polymersystem reaktiven Polyester kovalent an das Polymersystem angebunden werden oder bei der (ii) der mit dem duromerbildenden Polymersystem reaktive Polyester kovalent an das Duromer homogen verteilt in der Phase des Duromers angebunden wird.

## Claims

1. Mixture for a thermoset-forming polymer system, comprising
(i) at least one liquid component of the thermoset-forming polymer system,
(ii) a polyester reactive with the thermoset-forming polymer system, and
(iii) a nucleating seed-former for the crystallization of the polyester reactive with the thermoset-forming polymer system,
where at 20°C ≥ 10 wt% of the total amount of polyester reactive with a thermoset-forming polymer system is present in crystalline state and in suspension.

2. Mixture according to Claim 1, where the seed-former possesses a melting temperature ≥ 5°C above the melting temperature of the polyester reactive with the thermoset-forming polymer system and is preferably a further polyester.

3. Mixture according to Claim 1 or 2, where the weight ratio of seed-former to polyester reactive with the thermoset-forming polymer system is 0.5:99.5-45:55.

4. Mixture according to any of the preceding claims, where the polyester reactive with the thermoset-forming polymer system is a polycaprolactone having 2 to 50, preferably 2 to 20 and more preferably 2 to 10 reactive groups, more preferably alcohol groups.

5. Component produced or producible from or using a mixture according to any of the preceding claims.

6. Component according to Claim 5, comprising crystalline domains of the polyester reactive with the thermoset-forming polymer system, which are attached covalently to the crosslinked polymer, preferably a thermoset.

7. Component according to Claim 6, comprising the polyester reactive with the thermoset-forming polymer system and attached covalently to the thermoset in homogeneous distribution in the phase of the thermoset.

8. Use of a mixture according to any of Claims 1 to 4 for producing a component according to any of Claims 5 to 7 and/or as adhesive, casting compound, coating, dental material or matrix resin for composite materials, preferably fibre composite materials, more preferably carbon-fibre-reinforced fibre composite materials.

9. Method for producing a mixture according to any of Claims 1 to 4, comprising the steps of:
a) providing at least one liquid component for a thermoset-forming polymer system,
b) providing a polyester reactive with the thermoset-forming polymer system and present in the crystalline state at 20°C to an extent of ≥ 10 wt% of its total amount in the resulting mixture after step d),
c) providing a seed-former for the crystallization of the polyester reactive with the thermoset-forming polymer system, and
d) mixing the components provided so that ≥ 10 wt% of the total amount of polyester reactive with the thermoset-forming polymer system is present in the crystalline state and in suspension.

10. Method according to Claim 9, where the polyester reactive with the thermoset-forming polymer system is melted together with the seed-former and together with the or in the at least one further component of the resin composition, under conditions selected such that there is no crosslinking of the thermoset-forming polymer system and no reaction of the polyester reactive with the thermoset-forming polymer system with the thermoset-forming polymer system, and subsequently the mixture is cooled in such a way as to form crystals of the polyester reactive with the thermoset-forming polymer system.

11. Method for producing a component, comprising a method according to Claim 10 and subsequently the step of crosslinking the thermoset-forming polymer system at a temperature at which (i) crystals of the polyester reactive with the thermoset-forming polymer system are attached covalently to the polymer system or at which (ii) the polyester reactive with the thermoset-forming polymer system is attached covalently to the thermoset in homogeneous distribution in the phase of the thermoset.

## Revendications

1. Mélange pour un système polymère formant un duromère, comprenant
(i) au moins un composant liquide du système polymère formant un duromère,
(ii) un polyester réactif avec le système polymère formant un duromère, et
(iii) un agent de nucléation pour la cristallisation du polyester réactif avec le système polymère formant un duromère,
dans lequel à une température de 20 °C, ≥ 10 % en poids de la quantité totale en polyester réactif avec le système polymère formant un duromère sont présents dans un état cristallin et en suspension.

2. Mélange selon la revendication 1, dans lequel l'agent de nucléation possède une température de fonte ≥ 5 °C au-dessus de la température de fonte du polyester réactif avec le système polymère formant un duromère et est de manière préférée un autre polyester.

3. Mélange selon la revendication 1 ou 2, dans lequel le rapport de poids entre l'agent de nucléation et le polymère réactif avec le système polymère formant un duromère est de 0,5 : 99,5 - 45 : 55.

4. Mélange selon l'une quelconque des revendications précédentes, dans lequel le polyester réactif avec le système polymère formant un duromère est une polycaprolactone avec 2 à 50, de manière préférée 2 à 20 et de manière particulièrement préférée 2 à 10 groupes réactifs, de manière particulièrement préférée des groupes alcool.

5. Composant fabriqué ou pouvant être fabriqué à partir de, ou en utilisant un mélange selon l'une quelconque des revendications précédentes.

6. Composant selon la revendication 5, comprenant des domaines cristallins composés du polyester réactif avec le système polymère formant un duromère, lesquels sont liés de manière covalente au polymère réticulé, de manière préférée à un duromère.

7. Composant selon la revendication 6 comprenant le polyester réactif avec le système polymère formant un duromère, lequel est lié de manière covalente au duromère, selon une répartition homogène dans la phase du duromère.

8. Utilisation d'un mélange selon l'une quelconque des revendications 1 à 4 servant à fabriquer un composant selon l'une quelconque des revendications 5 à 7 et/ou en tant que colle, masse de scellement, revêtement, matériau dentaire ou résine matrice pour des matériaux composites, de manière préférée des matériaux composites à base de fibres, de manière particulièrement préférée des matériaux composites à base de fibre renforcés par des fibres de carbone.

9. Procédé servant à fabriquer un mélange selon l'une quelconque des revendications 1 à 4, comprenant les étapes :
a) de mise à disposition d'au moins un composant liquide pour un système polymère formant un duromère,
b) de mise à disposition d'un polyester réactif avec le système polymère formant un duromère, qui à 20 °C est présent dans un état cristallin à hauteur de ≥ 10 % en poids de sa quantité totale dans le mélange résultant après l'étape d),
c) de mise à disposition d'un agent de nucléation pour la cristallisation du polyester réactif avec le système polymère formant un duromère, et
d) de mélange des composants mis à disposition de sorte que ≥ 10 % en poids de la quantité totale en polyester réactif avec le système polymère formant un duromère sont présents dans un état cristallin et en suspension.

10. Procédé selon la revendication 9, dans lequel le polyester réactif avec le système polymère formant un duromère est fondu conjointement avec l'agent de nucléation et conjointement avec le composant ou l'au moins un autre composant de la composition de résine dans des conditions qui sont choisies de telle sorte que ni la réticulation du système polymère formant le duromère ni la réaction du polyester réactif avec le système de polymère formant le duromère ont lieu avec le système polymère formant un duromère et, par la suite, le mélange est refroidi de telle sorte que des cristaux se forment à partir du polyester réactif avec le système polymère formant un duromère.

11. Procédé servant à fabriquer un composant, comprenant un procédé selon la revendication 10 et par la suite l'étape de la réticulation du système polymère formant un duromère à une température à laquelle
(i) des cristaux issus du polyester réactif avec le système polymère formant un duromère sont liés de manière covalente au système polymère ou à laquelle
(ii) le polyester réactif avec le système polymère formant un duromère est lié de manière covalente au duromère selon une répartition homogène dans la phase du duromère.
